# EUROPÄISCHE PATENTSCHRIFT

(11) **EP 1 224 540 B1**
(45) Veröffentlichungstag und Bekanntmachung des Hinweises auf die Patenterteilung: **02.05.2003**
(21) Anmeldenummer: 00966119.0
(22) Anmeldetag: 05.10.2000
(51) Int. Cl.: G06F 9/38

(54) **PROZESSORSYSTEM, INSBESONDERE EIN PROZESSORSYSTEM FÜR KOMMUNIKATIONSEINRICHTUNGEN**
PROCESSOR SYSTEM, ESPECIALLY A PROCESSOR SYSTEM FOR COMMUNICATIONS DEVICES
SYSTEME DE PROCESSEUR, NOTAMMENT SYSTEME DE PROCESSEUR POUR DISPOSITIFS DE COMMUNICATION

(30) Priorität: 06.10.1999 DE 19948099
(43) Veröffentlichungstag der Anmeldung: 24.07.2002
(73) Patentinhaber: Infineon Technologies AG, 81669 München (DE)
(72) Erfinder: NIE, Xiaoning, 81543 München (DE)
(74) Vertreter: Banzer, Hans-Jörg, Dipl.-Ing.
(86) Internationale Anmeldenummer: EP0009741
(87) Internationale Veröffentlichungsnummer: WO01025902

(56) Entgegenhaltungen:
- EP-A- 0 529 913
- EP-A- 0 767 425
- US-A- 5 179 530
- US-A- 5 655 124
- US-A- 5 954 811

## Beschreibung

Die Erfindung bezieht sich auf ein Prozessorsystem mit den Merkmalen gemäß dem Oberbegriff des Anspruchs 1, welche aus dem Dokument US-A-5 954 811 bekannt sind.

Kommunikationscontroller werden in Kommunikationsendgeräten, Routern oder Gateways verwendet, welche nachfolgend der Einfachheit halber als Hostsystem bezeichnet werden. Mit Hilfe der Kommunikationscontroller wird in der Regel der Empfang und das Senden von Kommuikationsinformationen verwaltet bzw. gesteuert. Zum Senden werden die in Form von digitalen Daten vorliegenden Kommunikationsinformationen aus einem Puffer geholt und anschließend, eventuell verpackt mit weiteren Informationsbits, in einen Sendepuffer geschrieben. Der Inhalt des Sendepuffers wird anschließend an einen Modulator oder Transceiver weitergereicht, welcher die digitalen Sendedaten auf ein Trägersignal aufmoduliert, D/Awandelt und über einen Kommunikationskanal an einen Empfänger sendet.

Die Verarbeitung von Kommunikationsinformationen erfolgt in Übereinstimmung mit sogenannten Kommunikationsprotokollen, welche in Form von jeweils als "Layer" bezeichneten Schichten aufgebaut sind. In Senderichtung müssen in jedem Layer die Eingangsdaten des jeweiligen Layers mit einem sogenannten Protokollheader verpackt und in den untergeordneten Layer weitergereicht werden. In Empfangsrichtung muß hingegen den jeweiligen Eingangsdaten der Protokollheader entnommen und die Daten an den jeweils übergeordneten Layer weitergereicht werden. Somit sind neben der Auswertung und Ausführung von beispielsweise über einen Hostrechner oder Microcontroller extern zugeführten Steuerbefehlen die Hauptaufgaben eines Kommunikationscontrollers die Extraktion der Headerinformationen aus einem empfangenen Bitstrom, das Hinzufügen der Headerinformationen zu einem zu sendenden Bitstrom und das Weiterreichen der jeweiligen Daten an einen anderen Layer (d.h. der Datentransfer).

Hinsichtlich der Architektur von Kommunikationscontrollern sind verschiedene Vorschläge bekannt, welche im wesentlichen durch die jeweils verwendete zentrale Prozessoreinheit (CPU), die Speicherstruktur, die Busstruktur oder den Befehlssatz charakterisiert werden können. Eine typische Kommunikationscontroller-Architektur ist beispielsweise in "A 16Mb/s Adapter Chip for the IBM Token-Ring Local Area Network", J.D. Blair et. al., IEEE Journal of Solid-State Circuits, vol. 24, Dezember 1989, beschrieben. Der oben beschriebene Datentransfer stellt regelmäßig den Flaschenhals des Kommunikationscontrollers darstellt. Dies hat bei der zuvor erwähnten bekannten Architektur zur Folge, daß das auch als "Task Switch" bezeichnete Umschalten von einem Programmablauf auf einen anderen Programmablauf relativ lange dauert.

Aus diesem Grund wurden Kommunikationscontroller vorgeschlagen, deren Architektur die parallele Abarbeitung verschiedener Befehle oder Programmabläufe ermöglicht. So wird beispielsweise in der US-Patentschrift 5,434,976 ein Kommunikationscontroller vorgeschlagen, welcher zwei voneinander unabhängige zentrale Prozessoreinheiten (CPUs) aufweist, wobei jede Prozessoreinheit ihren eigenen Pfad zum Holen oder Auslesen eines auszuführenden Befehls und zum Decodieren und Ausführen des ausgelesenen Befehls besitzt. Mit Hilfe der einen Prozessoreinheit wird im wesentlichen die Funktion des sogenannten MAC-Layers ("Medium Access Control") wahrgenommen, während die andere Prozessoreinheit im wesentlichen Hostbefehle ausführt und die mit dem Empfang oder dem Senden von Daten verbundenen Pufferspeicherfunktionen verwaltet.

Obwohl mit Hilfe dieser bekannten Architektur eine wirkungsvolle Verarbeitung der Kommunikationsinformationen, insbesondere ein relativ schneller Datentransfer, möglich ist, besitzt diese Architektur den Nachteil, daß zwei getrennte Prozessoreinheiten verwendet werden, welche die benötigte Chipfläche sowie den Leistungsverbrauch erhöhen.

Der vorliegenden Erfindung liegt daher die Aufgabe zugrunde, ein Prozessorsystem vorzuschlagen, welches einerseits einer geringen Chipflächenbedarf und Leistungsverbrauch aufweist und andererseits eine wirkungsvolle und schnelle Ausführung der bei der Verarbeitung von Kommunikationsinformationen erforderlichen Funktionen ermöglicht.

Diese Aufgabe wird erfindungsgemäß durch ein Prozessorsystem mit den Merkmalen des Anspruches 1 gelöst. Die Unteransprüche definieren bevorzugte und vorteilhafte Ausführungsformen der vorliegenden Erfindung.

Das insbesondere in Form eines Kommunikationscontrollers ausgebildetes erfindungsgemäße Prozessorsystem umfaßt lediglich eine zentrale Prozessoreinheit (CPU) zur Ausführung von in einem Programmspeicher abgelegten Befehlen, wobei die Prozessoreinheit einen einzigen Pfad zum Auslesen eines Befehls aus dem Programmspeicher und zum Decodieren des ausgelesenen Befehls umfaßt. Des weiteren sind mehrere parallel betreibbare Ausführungspfade zum parallelen Ausführen verschiedener Befehle oder Programmabläufe vorgesehen, welche jeweils auf den gemeinsam zum Auslesen und Decodieren eines Befehls genutzten Pfad zugreifen.

Auf diese Weise ist prinzipiell die parallele Abarbeitung unterschiedlicher Programmabläufe möglich, wobei der Chipflächenbedarf und Leistungsverbrauch durch den gemeinsam genutzten Pfad zum Auslesen und Decodieren der Befehle minimiert werden kann.

Vorteilhaft ist es, wenn lediglich einer der Ausführungspfade die normalen Rechen- und Adressierfunktionen der CPU wahrnimmt, während ein anderer Ausführungspfad nur bestimmte spezielle Funktionen ausführt, so daß dieser Ausführungspfad einfacher implementiert und der Realisierungsaufwand weiter verringert werden kann. Besonders vorteilhaft ist es, wenn der zuletzt genannte Ausführungspfad nur eine besonders häufig benötigte Funktion ausführen kann, wobei dies bei der Verarbeitung von Kommunikationsprotokollen beispielsweise das Verschieben von Datenblöcken, d.h. der Datentransfer, sein kann.

Zum Verschieben, d.h. Laden oder Speichern, von Datenblöcken kann der Befehlssatz des Prozessorsystems vorteilhafterweise derart erweitert werden, daß mit dem entsprechenden "Block Move"-Befehl zugleich ein programmierbarer Offsetwert vorgegeben wird, mit dem der Datenblock beispielsweise in einen Ausgabeport geschrieben oder aus einem Eingabeport ausgelesen wird. Dabei kann als Offsetwert insbesondere ein Bitoffset verwendet werden.

Durch die Verwendung von Datenbussen unterschiedlicher Übertragungsraten können zudem weniger häufig benötigte oder langsamere Funktionen auf dem Datenbus mit der niedrigeren Übertragungsrate ausgeführt werden, während häufiger benötigte oder schnell auszuführende Funktionen, wie beispielsweise insbesondere Datentransfers, über den Datenbus mit der höheren Übertragungsrate ausgeführt werden können. Dieses erfindungsgemäße Ausführungsbeispiel unterscheidet sich somit von den bekannten Lösungen, welche entweder die Verwendung eines einzelnen Datenbus in Kombination mit einer einzigen Prozessoreinheit oder die Verwendung von zwei separaten Datenbussen in Kombination mit zwei separaten Prozessoreinheiten vorschlagen.

Im Falle eines Kommunikationscontrollers können auf diese Weise auf dem mit einer ausreichenden Bandbreite versehenen Datenbus, der die höhere Übertragungsrate aufweist, schnelle Transfers der sogenannten Payloaddaten ausgeführt werden, während die Verarbeitung der Protokoll-Headerdaten über den langsameren Datenbus erfolgt.

Weitere Vorteile der vorliegenden Erfindung, welche aus der zuvor beschriebenen Architektur des erfindungsgemäßen Prozessorsystems resultieren, sind u.a. die Verwendung unterschiedlicher Bitbreiten für die einzelnen Datenbusse und einer heterogenen Speicherhierarchie für die Ports, Register und den RAM-Datenspeicher des Prozessorsystems sowie die Möglichkeit der Implementierung unterschiedlicher Energiesparmodi für jeden Ausführungspfad und jeden Datenbus.

Die vorliegende Erfindung wird nachfolgend unter Bezugnahme auf die beigefügte Zeichnung anhand bevorzugter Ausführungsbeispiele näher erläutert.
Fig. 1 zeigt ein vereinfachtes Blockschaltbild einer zentralen Prozessoreinheit oder Zentraleinheit (CPU) gemäß einem Ausführungsbeispiel der vorliegenden Erfindung,
Fig. 2 zeigt die Anbindung der in Fig. 1 gezeigten Prozessoreinheit an ein erfindungsgemäßes Prozessorsystem, und
Fig. 3A-3C zeigen vergrößerte Darstellungen von in Fig. 2 gezeigten Ein-/Ausgabeports und Registern.

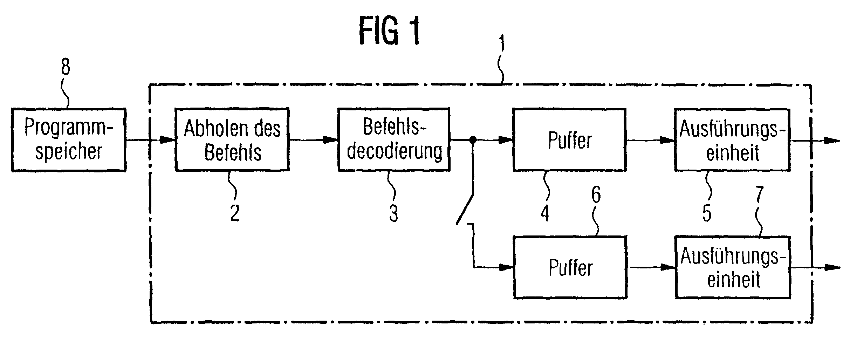

Wie in Fig. 1 gezeigt ist, umfaßt die als Kommunikationscontroller für beispielsweise ein Kommunicationsendgerät dienende Prozessoreinheit 1 (CPU) einen Pfad, um aus einem Programmspeicher 8 des Prozessorsystems einen Befehl auszulesen und zu decodieren, was in Fig. 1 in Form von Funktionsblöcken 2 und 3 dargestellt ist.

Um die bei der Verarbeitung von Kommunikationsdaten durchzuführenden Datentransfers sowie die Protokollverarbeitung zu optimieren, ist eine parallele Befehlsausführung vorgesehen, wobei die Parallelität erst nach den Funktionsblöcken 2 und 3 gegeben und durch mehrere parallel betreibbare Ausführungseinheiten 5, 7 gebildet ist. Insbesondere sind bei dem in Fig. 1 gezeigten Ausführungsbeispiel zwei derartige parallele Ausführungseinheiten 5, 7 zur unabhängigen Abarbeitung verschiedener Befehle oder Programmabläufe vorgesehen, wobei jeder Ausführungseinheit nach der Decodierstufe 3 ein Pufferspeicher oder Register 4 bzw. 6 zugeordnet ist. Diese Pufferspeicher 4, 6 dienen jeweils zum Speichern von Informationen, welche die nachfolgende Ausführungseinheit 5 bzw. 7 zur Befehlsausführung benötigt.

Gemäß der in Fig. 1 gezeigten Architektur wird somit lediglich ein einziger Pfad 2, 3 zum Holen bzw. Auslesen und Decodieren eines Befehls verwendet, der von sämtlichen parallel betreibbaren Ausführungseinheiten 5, 7 gemeinsam genutzt wird, wodurch die Implementierung und Programmierung vereinfacht wird.

Die Ausführungseinheiten 5 und 7 sind vorteilhafterweise unterschiedlich aufgebaut bzw. strukturiert. Eine dieser Ausführungseinheiten sollte zur Reduzierung des Realisierungsaufwands so einfach wie möglich aufgebaut sein, um lediglich eine begrenzte Anzahl von Funktionen oder Befehle ausführen zu können, während mindestens eine andere Ausführungseinheit so allgemein wie gewünscht gehalten werden kann und insbesondere alle möglichen Funktionen bzw. Befehle ausführen können sollte. Bei dem dargestellten Ausführungsbeispiel ist die Ausführungseinheit 7 sogar so weit vereinfacht, daß sie nur zur Durchführung eines bestimmten Befehls, vorzugsweise des Befehls zum Verschieben eines Datenblocks, ausgestaltet ist, während die Ausführungseinheit 5 den gesamten Befehlssatz des Prozessorsystems ausführen kann. Auf diese Weise kann der Aufbau des Puffers 6 und der Ausführungseinheit 7 gegenüber dem Aufbau des Puffers 4 und der Ausführungseinheit 5 vereinfacht werden.

Wie bereits erwähnt worden ist, dienen die Puffer 4 und 6 jeweils zum Zwischenspeichern von Informationen, welche für die Durchführung des in dem jeweiligen Ausführungspfad auszuführenden Befehls erforderlich sind. Bei der Ausführung von Befehlen, welche mehrere Zyklen dauern (wie z.B. bei einem Datenblock-Verschiebebefehl), werden die jeweils benötigten Informationen in den Puffern 4 bzw. 6 gespeichert, um auf diese Weise den Pfad mit den Funktionsblöcken 2 und 3 für die parallele Durchführung eines anderen Befehls freizumachen. Dient die Ausführungseinheit 7 lediglich zur Ausführung des Befehls zur Verschiebung eines Datenblocks, muß in den entsprechenden Puffer 6 lediglich ein Bit zur Unterscheidung zwischen einem Lade- und einem Speicherbefehl, die Adresse der Datenquelle bzw. der Datensenke, die Anzahl der zu verschiebenden Datenwörter (z.B. Bytes) sowie gegebenenfalls eine nachfolgend noch näher erläuterte Offsetinformation (z.B. eine Bitoffsetinformation) gespeichert werden.

Ist die Ausführungseinheit 7 zur Durchführung eines Datentransfers aktiv, kann der Ausführungspfad der Ausführungseinheit 5 parallel mit einem weiteren Programmablauf ("Task") belegt werden. Jedem Programmablauf sind seine eigenen Zustandsvariablen zugeordnet, welche den auch als "Kontext" bezeichneten Zustandsraum des jeweiligen Programmablaufs bilden. Für jeden aktiven Programmablauf sollte eine eigene Hardware, wie z.B. Programmzähler und Register zum Speichern der jeweiligen Zustandsvariablen (Zero-Bits, Carry-Bits, Adress Pointer etc.), vorgesehen sein, so daß beim Umschalten von einem Programmablauf auf einen anderen die jweils vorhandene Hardware mit den entsprechenden Zustandsvariablen umgeschaltet wird und eine Kontext-Umschaltung ohne Zyklenverlust möglich ist.

Für den sogenannten Multitasking- oder Parallelbetrieb wird ein Befehlssatz benötigt, der u.a. Befehle zum Starten und Stoppen eines Programmablaufs, zum Setzen einer programmablaufspezifischen Priorität oder zum Warten auf ein Signal zur Programmablauf-Synchronisation umfaßt. Für den Fall, daß die Ausführungseinheit 5 keinen Befehl mehr auszuführen hat, soll vorgesehen sein, daß der gesamte Pfad vom Funktionsblock 2 bis zum Funktionsblock 5 sowie die entsprechenden Register für die Zustandsvariablen abgeschaltet werden können, was ebenfalls über einen expliziten Befehl zur Taktabschaltung geschehen kann.

Da jede der beiden Ausführungseinheiten 5, 7 unterschiedlichen Programmabläufen zugeordnet sind, wird die Kommunikation zwischen der ALU ("Algorithmic Logical Unit"), den Registern, RAM-Speichern und Datenbusses etc. des Prozessorsystem vereinfacht. Da der Datentransfer eines Programmablaufs in der Ausführungseinheit 7 parallel zu einem anderen Programmablauf, welcher von der Ausführungseinheit 5 abgearbeitet wird, ablaufen kann, kann im Vergleich zu einem DMA-basierten Prozessorsystem ("Direct Memory Access") auch dann eine bessere Kontrolle innerhalb der Software erzielt werden, wenn der Datenverschiebebefehl unterbrechen werden müßte. Zudem ist keine Verwaltung von DMA-Controllern erforderlich, was zu einer Reduzierung des Programmcodes und des Energiebedarfs beiträgt. Zudem werden die Hardwarekosten verringert, da die Register oder Puffer 4, 6 mehrmals verwendet werden können und keine zusätzlichen Register für die DMA-Controller erforderlich sind.

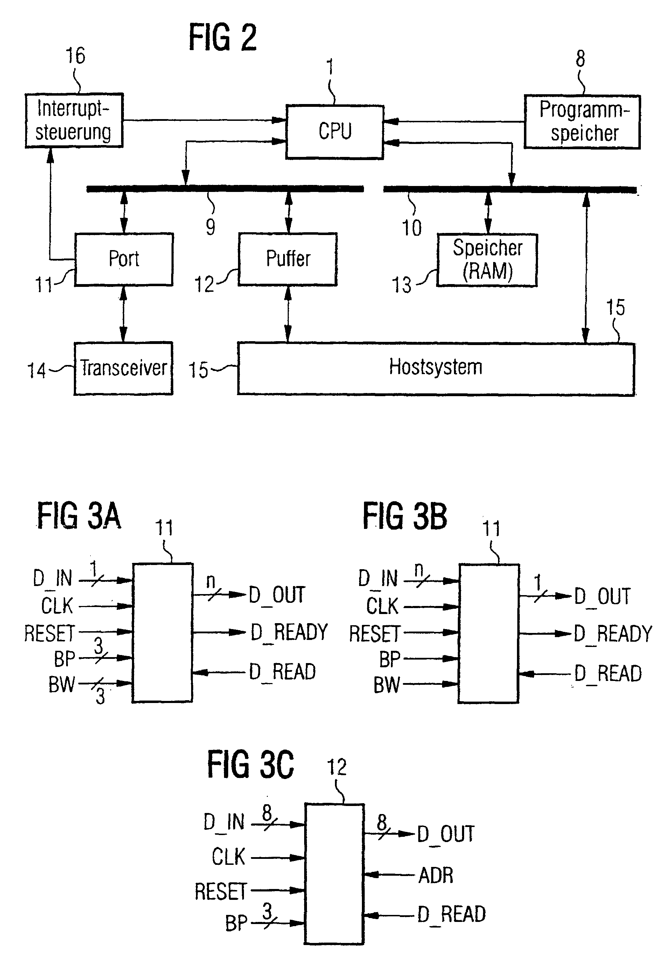

Wie bereits erwähnt worden ist, dient die Ausführungseinheit 7 bevorzugt lediglich zur Durchführung eines Datenblock-Verschiebebefehls, während die Ausführungseinheit 5 so allgemein wie möglich ausgestaltet sein kann, um alle möglichen Funktionen oder Befehle ausführen zu können. Bei der Verarbeitung von Kommunikationsdaten kann die Ausführungseinheit 7 somit zur Durchführung von Datentransfers verwendet werden, während die Ausführungseinheit 5 parallel dazu die restliche Protokollverarbeitung übernimmt. Da die Datentransfers im Vergleich zu der Protokollverarbeitung relativ schnell ablaufen müssen, ist es vorteilhaft, die Ausführungseinheit 7 an einen Datenbus mit relativ hoher Übertragungsrate anzuschließen. Dies soll nachfolgend näher anhand Fig. 2 erläutert werden.

Die zentrale Prozessoreinheit 1 ist innerhalb des Prozessorsystem mit zwei Datenbussen 9 und 10 verbunden, wobei der Datenbus 9 eine höhere Übertragungsrate aufweist als der Datenbus 10. Die Prozessoreinheit 1 kann mit ihrer Ausführungseinheit 7 lediglich auf den Datenbus 9 zugreifen, während die allgemein aufgebaute Ausführungseinheit 5 beide Datenbusse 5, 7 nutzen kann. Zur Realisierung der schnellen Datentransfers, insbesondere zur Verschiebung der sogenannten Payloaddaten von Kommunikationsprotokollen, welche die eigentlichen Kommunikationsinformationen aufweisen, sind Einund Ausgabeports 11 sowie Puffer oder Register 12 an den schnellen Datenbus 9 angeschlossen. Die Ports 11 sind als aufwendigere Spezialregister realisiert und dienen als Schnittstelle zu einem auch als Modulator bezeichneten Transceiver 14 des entsprechenden Kommunikationsendgeräts, über den Daten gesendet bzw. empfangen werden. Ein Interrupt Controller 16 wertet insbesondere von den Ports 11 generierte Interruptsignale aus und steuert davon abhängig in Übereinstimmung mit einer vorgegebenen Interruptbehandlung die zentrale Prozessoreinheit 1 an. Die Puffer 12 bilden die Schnittstelle zu dem jeweiligen Hostsystem 15 (d.h. dem jeweiligen Kommunikationsendgerät, Router oder Gateway), welches den zu übertragenden bzw. empfangenden Bitstrom in die Puffer 12 schreibt bzw. ausliest. Die beispielsweise als RAM-Speicher realisierten Puffer 12 können über von der Prozessoreinheit 1 konfigurierbare DMA-Controller gesteuert werden, so daß die Datentransfers zwischen den Puffern 12 und dem Hostsystem 15 keine nenneswerte Belastung für die Prozessoreinheit 1 darstellen. Der langsamere Datenbus 10 ist hingegen mit dem eigentlichen Datenspeicher 13 des Prozessorsystems verbunden, der in Form eines RAM-Massenspeichers ausgestaltet ist und vornehmlich zum Zwischenspeichern von Steuerinformationen und Headerinformationen eines Kommunikationsprotokolls dient.

Auf diese Weise sind die bei der Verarbeitung von Kommunikationsprotokollen für den Transfer der sogenannten Payloaddaten vorgesehenen Komponenten 11, 12 von dem für die Verarbeitung der Protokoll-Headerdaten vorgesehenen Abschnitt getrennt, und für die schnell durchzuführenden Payloaddatenttransfers kann die Ausführungseinheit 7 sowie der schnelle Datenbus 9 genutzt werden, während über den langsameren Datenbus 10 (und die Ausführungseinheit 5) dazu parallel die Verarbeitung der Headerdaten des jeweiligen Kommunikationsprotokolls ablaufen kann.

In Fig. 3A sind die einem Port 11 mit seriellem Dateneingang und parallelem Datenausgang zugeführten Signale dargestellt. Dieser Port 11 empfängt seriell Eingangsdaten D_IN, welche entsprechend einem Taktsignal CLK in den Port 11 geschrieben werden. Zudem empfängt der Port 11 eine 3 Bit-Steuerinformation BW, welche die Bitposition des einzuschreibenden Daten bezeichnet, sowie eine weitere 3 Bit-Steuerinformation BW, welche die Breite oder Länge des einzuschreibenden Bitfeldes bezeichnet. Auf diese Weise wird in den Port 11 ein Datenblock der Länge BW mit einem auf die erste Bitposition des Ports 11 bezogenen Bitoffset der Länge BP geschrieben. Als weiteres Steuersignal wird ein Resetsignal RESET dem Port 11 zugeführt. Ausgangsseitig werden die Daten mit n Bits parallel ausgelesen, wobei über ein weiteres Steuersignal D_READ das Lesen der Daten freigegeben wird. Darüber hinaus ist ein Interruptsignal D_READY vorgesehen, welches einen Interrupt erzeugt, wenn in dem Port 11 Daten gespeichert sind.

In Fig. 3B sind die einem Port 11 mit parallelem Dateneingang und seriellem Datenausgang angelegten Signale dargestellt, wobei sich dieser Port von dem in Fig. 3A gezeigten Port lediglich dadurch unterscheidet, daß eingangsseitig n-Bits parallel eingelesen und die Ausgangsdaten seriell ausgegeben werden.

Schließlich sind in Fig. 3C auch die an einen Puffer oder ein Register 12 angelegten Signale dargestellt, wobei in die Puffer 12 vorzugsweise Datenwörter in Form von Bytes geschrieben und ausgelesen werden. Zudem wird ein Adreßsignal ADR angelegt, welches jeweils die Adresse des Puffers 12 bezeichnet, auf die zugegriffen werden soll.

## Patentansprüche

1. Prozessorsystem,
mit einer Prozessoreinheit (1) zur Ausführung von in einem Programmspeicher (8) abgelegten Befehlen,
wobei die Prozessoreinheit (1) Befehlsauslesemittel (2) zum Auslesen eines Befehls aus dem Programmspeicher (8) und Befehlsdecodiermittel (3) zum Decodieren des Befehls und Befehlsausführungsmittel (4-7) zum Ausführen des Befehls umfaßt,
wobei die Befehlsausführungsmittel (4-7) mehrere parallel betreibbare Ausführungseinheiten (5, 7) zum parallelen Ausführen verschiedener Befehle umfassen, und
wobei die Befehlsauslesemittel und die Befehlsdecodiermittel (3) für sämtliche Ausführungseinheiten (5,7) gemeinsam vorgesehen sind,
**dadurch gekennzeichnet,**
**daß** eine Ausführungseinheit (5) der Befehlsausführungsmittel (4-7) zur Ausführung aller möglichen Befehle ausgestaltet ist und mit einem ersten Datenbus (10) verbunden ist, und eine zweite Ausführungseinheit (7) zur Ausführung häufig benötigter Befehle ausgestaltet ist und mit einem zweiten Datenbus (9) verbunden ist, wobei die Übertragungsgeschwindigkeit des ersten Datenbus (10) niedriger als die Übertragungsgeschwindigkeit des zweiten Datenbus (9) ist.

2. Prozessorsystem nach Anspruch 1,
**dadurch gekennzeichnet,**
**daß** jeder Ausführungseinheit (5,7) Zwischenspeichermittel (4,6) zum Speichern von für die Ausführung des von der jeweiligen Ausführungseinheit (5,7) auszuführenden Befehls erforderlichen Informationen zugeordnet sind.

3. Prozessorsystem nach Anspruch 1 oder 2,
**dadurch gekennzeichnet,**
**daß** eine erste Ausführungseinheit (5) der Befehlsausführungsmittel (4-7) zur Ausführung aller Befehle eines Befehlssatzes des Prozessorsystems ausgestaltet ist, und
**daß** eine zweite Ausführungseinheit (7) der Befehlsausführungsmittel (4-7) zur Ausführung lediglich einiger spezieller Befehle dieses Befehlssatzes ausgestaltet ist.

4. Prozessorsystem nach Anspruch 3,
**dadurch gekennzeichnet,**
**daß** die zweite Ausführungseinheit (7) zur Ausführung lediglich eines speziellen Befehls des Befehlssatzes des Prozessorsystems ausgestaltet ist.

5. Prozessorsystem nach Anspruch 4,
**dadurch gekennzeichnet,**
**daß** die zweite Ausführungseinheit (7) lediglich zur Ausführung eines Befehls zur Verschiebung eines Datenblocks ausgestaltet ist.

6. Prozessorsystem nach Anspruch 5 und Anspruch 2,
**dadurch gekennzeichnet,**
**daß** die in den der zweiten Ausführungseinheit (7) zugeordneten Zwischenspeichermitteln (6) gespeicherten Informationen eine Speicher- bzw. Ladeadresse des zu speichernden bzw. zu ladenden Datenblocks, die Anzahl der zu verschiebenden Datenwörter des Datenblocks, einen Offsetwert, mit dem der Datenblock gespeichert bzw. gelesen werden soll und/oder Steuerinformationen, welche angeben, ob es sich bei dem auszuführenden Befehl um einen Speicher- oder Lesebefehl handelt, umfassen.

7. Prozessorsystem nach einem der Ansprüche 3-6,
**dadurch gekennzeichnet,**
**daß** die Prozessoreinheit (1) derart ausgestaltet ist, daß der von den Befehlsauslesemitteln (2) über die Befehlsdecodiermittel (3) zu der ersten Ausführungseinheit (5) führende Pfad vorübergehend deaktiviert wird, falls von der ersten Ausführungseinheit (5) augenblicklich kein Befehl auszuführen ist.

8. Prozessorsystem nach einem der vorhergehenden Ansprüche,
**dadurch gekennzeichnet,**
**daß** das Prozessorsystem (8) zur Verarbeitung von Telekommunikationsprotokollen vorgesehen ist, und
**daß** der erste Datenbus (10) zur Verarbeitung von Headerdaten der Telekommunikationsprotokolle vorgesehen ist, während der zweite Datenbus (11) für einen schnellen Transfer von Payloaddaten vorgesehen ist.

9. Prozessorsystem nach einem der vorhergehenden Ansprüche,
**dadurch gekennzeichnet,**
**daß** an den ersten Datenbus (10) ein Datenspeicher (13) des Prozessorsystems angeschlossen ist, und
**daß** an den zweiten Datenbus (9) mindestens ein Ein- und/oder Ausgabeport (II) und/oder mindestens ein Register oder Puffer (12) angeschlossen ist.

10. Prozessorsystem nach Anspruch 8 und 9,
**dadurch gekennzeichnet,**
**daß** der an den zweiten Datenbus (9) angeschlossene Einund/oder Ausgabeport mit einer Sende- und/oder Empfangseinheit (14) eines Kommunikationsendgeräts verbunden ist, und
**daß** das an den zweiten Datenbus (9) angeschlossene Register oder Puffer (12) zum Zwischenspeichern eines von dem Kommunikationsendgerät zu sendenden bzw. zu empfangenden Bitstroms vorgesehen ist.

11. Prozessorsystem nach einem der vorhergehenden Ansprüche und einem der Ansprüche 3-7,
**dadurch gekennzeichnet,**
**daß** die mit dem ersten Datenbus (10) verbundene Ausführungseinheit der Befahlsausführungsmittel (4-7) der ersten Ausführungseinheit (5) und die mit dem zweiten Datenbus (9) verbundene Ausführungseinheit der zweiten Ausführungseinheit (7) entspricht.

12. Prozessorsystem nach Anspruch 11,
**dadurch gekennzeichnet,**
**daß** die erste Ausführungseinheit (5) zudem mit dem zweiten Datenbus (9) verbunden ist, um auch auf den zweiten Datenbus (9) zugreifen zu können, während die zweite Ausführungseinheit (7) nur mit dem zweiten Datenbus (9) verbunden ist.

## Claims

1. Processor system, with a processor unit (1) for executing instructions filed in a program memory (8), whereby the processor unit (1) comprises instruction read out means (2) for reading out an instruction from the program memory (8), and instruction decoding means (3) for decoding the instruction and instruction executing means (4-7) for executing the instruction,
whereby the instruction executing means (4-7) comprise a plurality of executing units (5,7) operable in parallel for parallel execution of various instructions, and the instruction read out means and the instruction decoding means (3) are jointly provided for all executing units (5,7), **characterised in that** an executing unit (5) of the instruction executing means (4-7) is connected to a first databus (10) and a second executing unit (7) is connected to a second databus (9) whereby the transmission rate of the first databus (10) is lower than the transmission rate of the second databus (9).

2. Processor system according to claim 1,
**characterised in that** temporary storage means (4, 6) for storing information required for executing the instruction to be carried out by the particular executing unit (5,7) are associated with each executing unit (5,7).

3. Processor system according to claim 1 or 2,
**characterised in that** a first executing unit (5) of the instruction executing means (4-7) is designed to execute all instructions of a set of instructions of the processor system, **and in that** a second executing unit (7) of the instruction executing means (4-7) is designed to execute only a few special instructions of the instruction set.

4. Processor system according to claim 3,
**characterised in that** the second executing unit (7) is designed to execute only one special instruction of the instruction set of the processor system.

5. Processor system according to claim 4,
**characterised in that** the second executing unit (7) is designed to execute only an instruction to move a data block.

6. Processor system according to claim 5 and claim 2,
**characterised in that** the information stored in the temporary storage means (6) associated with the second executing unit (7) comprises a storage or loading address of the datablock to be stored or loaded, the amount of data elements of the datablock to be moved, an offset value, with which the datablock has to be stored or read and/or control information, which specifies whether the instruction to be carried out concerns a storage or read instruction.

7. Processor system according to one of claims 3-6,
**characterised in that** the processor unit (1) is designed in such a way that the path leading to the first executing unit (5) is temporarily deactivated by the instruction read out means (2) via the instruction decoding means (3), if momentarily no instruction has to be executed by the first executing unit (5).

8. Processor system according to one of the previous claims, **characterised in that** the processor system (8) is intended for processing telecommunications protocols, and **in that** the first databus (10) is intended for processing header data of the telecommunications protocols, while the second databus (11) is intended for fast transfer of payload data.

9. Processor system according to one of the previous claims, **characterised in that** a data memory (13) of the processor system is connected to the first databus (10), **and in that** at least one input and/or output port (11) and/or at least one register or buffer (12) is connected to the second databus (9).

10. Processor system according to claim 8 and 9,
**characterised in that** the input and/or output port connected to the second databus (9) is connected to a transmitter and/or receiver unit (14) of a communication transmitter, and **in that** the register or buffer (12) connected to the second databus (9) is provided for temporary storage of a bitstream to be transmitted or received by the communication transmitter.

11. Processor system according to one of the above claims and one of claims 3-7, **characterised in that** the executing unit of the instruction executing means (4-7) connected to the first databus (10) corresponds to the first executing unit (5) and the executing unit connected to the second databus (9) corresponds to the second executing unit (7)

12. Processor system according to claim 11,
**characterised in that** the first executing unit (5) is also connected to the second databus (9), so that it can also access the second databus (9), while the second executing unit (7) is only connected to the second databus (9).

## Revendications

1. Système de processeur,
avec une unité de processeur (1) destinée à exécuter des instructions enregistrées dans une mémoire de programmation (8),
dans lequel l'unité de processeur (1) comprend des moyens de lecture d'instructions destinés à lire une instruction présente dans la mémoire de programme (8) et des moyens de décodage d'instructions (3) destinés à décoder l'instruction et des moyens d'exécution d'instructions (4 à 7) destinés à exécuter l'instruction,
dans lequel les moyens d'exécution d'instructions (4 à 7) comprennent plusieurs unités d'exécution (5, 7) exploitables en parallèle destinées à exécuter en parallèle différentes instructions, et dans lequel sont prévus en commun les moyens de lecture d'instructions et les moyens de décodage d'instructions (3) pour toutes les unités d'exécution (5, 7),
**caractérisé en ce qu'**une unité d'exécution (5) des moyens d'exécution d'instructions (4 à 7) est reliée à un premier bus de données (10), et qu'une deuxième unité d'exécution (7) est reliée à un deuxième bus de données (9), la vitesse de transmission du premier bus de données (10) étant inférieure à la vitesse de transmission du deuxième bus de données (9).

2. Système de processeur selon la revendication 1, **caractérisé en ce qu'**à chaque unité d'exécution (5, 7) sont affectés des moyens de mémorisation intermédiaire (4, 6) destinés à mémoriser des informations nécessaires à l'exécution de l'instruction à exécuter par l'unité d'exécution (5, 7) respective.

3. Système de processeur selon la revendication 1 ou 2, **caractérisé en ce qu'**une première unité d'exécution (5) des moyens d'exécution d'instructions (4 à 7) est conçue pour exécuter toutes les instructions d'un ensemble d'instructions du système de processeur, et
qu'une deuxième unité d'exécution (7) des moyens d'exécution d'instructions (4 à 7) est conçue pour n'exécuter que quelques instructions spéciales de cet ensemble d'instructions.

4. Système de processeur selon la revendication 3, **caractérisé en ce que** la deuxième unité d'exécution (7) n'est conçue que pour exécuter une instruction spéciale de l'ensemble d'instructions du système de processeur.

5. Système de processeur selon la revendication 4, **caractérisé en ce que** la deuxième unité d'exécution (7) n'est conçue que pour exécuter une instruction destinée à décaler un bloc de données.

6. Système de processeur selon la revendication 5 et la revendication 2, **caractérisé en ce que** les informations mémorisées dans les moyens de mémorisation intermédiaire (6) affectés à la deuxième unité d'exécution (7) comprennent une adresse de mémorisation respectivement une adresse de chargement du bloc de données à mémoriser respectivement à charger, le nombre des mots de données à décaler du bloc de données, une valeur de décalage avec laquelle le bloc de données doit être mémorisé respectivement lu et/ou des informations de commande qui indiquent si l'instruction à exécuter est une instruction de mémorisation ou une instruction de lecture.

7. Système de processeur selon l'une des revendications 3 à 6, **caractérisé en ce que** l'unité de processeur (1) est conçue de manière que le chemin, allant des moyens de lecture d'instructions (2) à la première unité d'exécution (5) via les moyens de décodage d'instructions (3), soit provisoirement désactivé au cas où la première unité d'exécution (5) n'exécute à ce moment aucune instruction.

8. Système de processeur selon l'une des revendications précédentes, **caractérisé en ce que** le système de processeur (8) est prévu pour traiter des protocoles de télécommunication, et que le premier bus de données (10) est prévu pour traiter des données d'en-tête des protocoles de télécommunication tandis que le deuxième bus de données (11) est prévu pour transférer rapidement des données de charge utile.

9. Système de processeur selon l'une des revendications précédentes, **caractérisé en ce qu'**une mémoire de données (13) du système de processeur est reliée au premier bus de données (10), et qu'au moins un port d'entrée et/ou de sortie (11) et/ou au moins un registre ou une mémoire tampon (12) est relié(e) au deuxième bus de données (9).

10. Système de processeur selon les revendications 8 et 9, **caractérisé en ce que** le port d'entrée et/ou de sortie relié au deuxième bus de données (9) est relié à une unité d'émission et/ou de réception (14) d'un terminal de communication,
et que le registre ou la mémoire tampon (12) relié(e) au deuxième bus de données (9) est prévu pour mémoriser temporairement un train de bits à recevoir ou à émettre par le terminal de communication.

11. Système de processeur selon l'une des revendications précédentes et une des revendications 3 à 7, **caractérisé en ce que** l'unité d'exécution des moyens d'exécution d'instructions (4 à 7) reliée au premier bus de données (10) correspond à la première unité d'exécution (5) et que l'unité d'exécution reliée au deuxième bus de données (9) correspond à la deuxième unité d'exécution (7).

12. Système de processeur selon la revendication 11, **caractérisé en ce que** la première unité d'exécution (5) est reliée en plus au deuxième bus de données (9) afin de pouvoir également accéder au deuxième bus de données (9) tandis que la deuxième unité d'exécution (7) n'est reliée qu'avec le deuxième bus de données (9).
